# EUROPEAN PATENT SPECIFICATION

(11) **EP 3 445 535 B1**
(45) Date of publication and mention of the grant of the patent: **08.05.2024**
(21) Application number: 17719549.2
(22) Date of filing: 20.04.2017
(51) Int. Cl.: B25J 9/12, B25J 17/00, B25J 19/02

(54) **DRIVE UNIT FOR A MANIPULATOR**
ANTRIEBSEINHEIT FÜR EINEN MANIPULATOR
UNITÉ D'ENTRAÎNEMENT POUR UN MANIPULATEUR

(30) Priority: 20.04.2016 DE 102016004810
(43) Date of publication of application: 27.02.2019
(73) Proprietor: FRANKA EMIKA GmbH, 80797 München (DE)
(72) Inventor: HADDADIN, Sami, 30173 Hannover (DE); ROKAHR, Tim, 81245 München (DE); LEYENDECKER, Patrick, 89542 Herbrechtingen (DE); BOEHME, Niklas, 80922 München (DE)
(74) Representative: Novagraaf Group
(86) International application number: PCT/EP2017/059446
(87) International publication number: WO 2017/182592

(56) References cited:
- WO-A1-2007/082954
- CA-A1- 2 940 490
- CN-A- 104 786 217
- US-A1- 2015 053 040
- B Schäfer ET AL: "Light-Weight Mechatronics and Sensorics for Robotic Exploration: a DLR Perspective", , 25 February 2008 (2008-02-25), XP055358610, Retrieved from the Internet: URL:http://elib.dlr.de/55362/1/i-sairas200 8_Schäfer.pdf [retrieved on 2017-03-24]

## Description

The present invention relates to a drive device or unit with respect to a joint being arranged between two arm or axle members of a manipulator of a robotic system.

Drive units, which are used in manipulators of robotic systems and robot arms, respectively, are intended to arrange one axle or arm member relatively movably, preferably rotatably, in relation to a subsequent arm member of a robot arm, which usually is configured with a plurality of axes. The movability between two adjacent arm members being realized thereby results in corresponding degrees of freedom of the robotic system depending on the number of the arm members of the manipulator.

In this connection, drive units for industrial robots are employed which allow a rotation of an arm member around an axis being traverse to its longitudinal extension. Further drive units are configured to allow a rotation around the longitudinal axis of the arm member. For that purpose, usually correspondingly dimensioned electric motors are used, which, where appropriate, cooperate with corresponding reduction gears.

With respect to light-weight robots, the drive units are mounted inside the closed housing of the arm member, since the housings of manipulators of robots of such kind are in principle configured as exoskeletons.

Normally, in drive units as known in the prior art at least one sensor device is provided at the side of the output in order to detect the position, the torque and/or the rotational speed of an output element, which sets the one arm member in rotation relative to the other arm member. In order to detect the input or drive rotational speed, the drive torque and/or the position of an input or drive shaft being driven by a motor, moreover, a further sensor device is provided at the side of the motor and at the side of the input, respectively.

Each sensor device usually is located on a separate circuit board or printed circuit board (PCB), respectively, which circuit boards are arranged at corresponding locations of the drive unit.

One circuit board having a sensor device for the input therefor is located in the area of the motor or the drive shaft being activated by it, in which the motor is received within that arm member, which is rotatably supported against the other arm member. Therefore, the circuit board, which could also contain the entire control electronics assembly for the drive unit, comprises one position sensor only for the detection of the input or drive.

Detection of the output is performed by a second position sensor, which is located on an independent circuit board, which is configured entirely separate from the circuit board containing the first position sensor both with respect to spatial and signaling aspects. This circuit board is located within the drive unit in the area of the output, i.e. in cooperation with an output element, for example an output flange or an output housing, which usually are provided in the housing of the arm member being rotatably supported.

However, using a position sensor being located in this area together with a stand-alone circuit board containing said position sensor is associated with the drawback, that on the one hand the second position sensor has to be accurately aligned within the drive unit, which leads to errors, and that on the other the signals generated by it have to be transmitted via wires to the circuit board with the first position sensor for the drive, which circuit board is arranged axially opposite to the output and which contains the control and evaluation electronics assembly.

Therefore, only one position sensor per circuit board can be read by the evaluation electronics assembly.

With respect to exoskeleton-type housings of light-weight robotic systems, however, the problem exists that the drive units with all components have to be inserted axially into the housings of the arm members due to the self-contained, completely encased housing structures and have to be mounted there in a cumbersome way due to the very restricted access. This also comes true with respect to wiring which leads from the output side to the input drive side.

Moreover, there is the problem that a simple wiring will not be sufficient in order to directly detect the signal being generated by the output side sensor device, since this signal may be deteriorated upon its passage through the drive unit to the circuit board containing the drive side position sensor and past the electric motor. Therefore a corresponding data bus is usually required, which increases the costs with respect to the electronics assembly for such drive unit.

Further, in case the movable components of the drive unit and thus the arm members do mutually rotate, torsional stresses are exposed to the wires leading from the output side circuit board to the input side circuit board, which extend at least along a part of the length of the drive unit, if not along the entire axial length. After a certain period this may result in a malfunction of the wiring.

If furthermore a torque sensor is employed in the drive unit, which is arranged itself on a stand-alone circuit board, already three different circuit boards have to be arranged within the drive unit, which increases the required assembly space or which substantially reduces the actually available assembly space depending on the housing structures of the arm members. Thereby, wiring becomes even more complicated.

Finally it has to be noted that the number of circuit boards for the single sensor devices and the wiring required for it with respect to the drive units as known in the prior art basically increases the assembly efforts in connection with the single mechatronic components, so that the costs for the manufacture of the mechatronic and mechanic components as well as for the assembly and also the maintenance of the drive unit will increase significantly.

For example, CA 2 940 490 A1 discloses a drive unit for a joint of a manipulator of a robotic system, the drive unit being intended for the rotatory drive of one arm member in relation to another arm member, comprising a circuit board, on which a sensor device with respect to the drive is arranged, while another sensor device is arranged on a separate housing plate being arranged axially above the circuit board. A drive unit according to the preamble of claim 1 is known from CN 104 786 217 A.

Based on that it is an object of the present invention to provide a drive unit with respect to a joint between two arm members of a manipulator of a robotic system, in particular, but not exclusively of the light-weight kind, which overcomes the aforementioned disadvantages as known from the prior art, and which in particular enables a simplified assembly of the sensor devices and their maintenance as well as increases the reliability with respect to the detection of the input- and output-side related parameters.

Such object is solved by a drive unit according to claim 1.

Thus, the invention relates to a drive unit for a joint being arranged between two arm members of a manipulator of a robotic system, the drive unit being intended for the rotational drive of the one arm member relative to the other arm member, and the drive unit having a motor, which drives a drive shaft, and an output element which is connected to the one arm member and which is set into rotation directly or indirectly by the drive shaft, in which a circuit board or a printed circuit board (PCB) is provided, on which circuit board a sensor device for the drive as provided by the drive shaft and a sensor device for the output as provided by the output element are arranged.

Contrary to the prior art thus only one single circuit board is employed which carries all necessary sensor components, which include at least one position sensor with respect to the drive and at least one position sensor with respect to the output and which could, if applicable, comprise still further sensors, such as a torque sensor.

According to the invention thereby the sensor device for the drive and the sensor device for the output shall be arranged on opposing sides of the circuit board.

An advantage that both sensor devices are directly mounted on one single circuit board, which circuit board is arranged axially opposite to the output element of the drive unit, e.g. at or on top of a motor housing, lies in the fact that an updating procedure of e.g. the firmware with respect to all sensors has to be performed only once, since no position sensor for the output is spatially separated from this circuit board and arranged on a further circuit board.

Complex wiring is not necessary anymore so that the disadvantages associated with such wiring, such as need for space, torsional stresses etc. are completely dropped.

Power supply of the sensor devices as well as the evaluation electronics assembly are directly located on the single circuit board. Since thereby less electric components and connections are spread along the drive unit, such drive unit basically is better prepared against failures.

Calibration of the sensor devices can be directly carried out for the assembled drive unit in a simple manner, in which all data with respect to control, calibration etc. for both sensor devices can be stored in one common memory of the circuit board.

In order to enable that the drive-side and output-side related parameters can be detected by means of sensor devices being arranged on one single circuit board, it is provided according to the invention that the drive shaft being actuated by the motor is configured as a hollow shaft and that the output element is coupled with a sensor shaft in a rotationally fixed, i.e. torque-transmitting manner, in which the sensor shaft traverses the drive shaft with a radial distance and extends as far as to the circuit board.

The sensor shaft may extend through an opening in the circuit board towards the side of it which is opposite to the motor, while the drive shaft of the motor may extend up to the side of the circuit board, which faces the motor.

According to the invention it is provided that a sensor ring is arranged at the face-side axial end of the sensor shaft above the circuit board, which sensor ring cooperates with the sensor device for the output, which is arranged at said side of the circuit board.

In similar fashion the drive shaft carries a sensor ring at its face-side axial end, which faces the circuit board, as well, which sensor ring cooperates with the sensor device for the drive/input, which is arranged at the side of the circuit board, which faces the motor.

The sensor rings each may comprise at least one magnetic element or a series of magnetic elements, in which the corresponding sensor device or corresponding sensor chip, respectively, is configured to detect the respective position of the magnetic sensor ring using the Hall-effect.

Preferably, the sensor devices for both the output and the input are sensors of the same type, which further enhances the evaluation electronics.

While the output is sensed absolutely via the actual position of the sensor ring for the output, since the latter only performs a rotation of at maximum or less than 360°, the drive/input, i.e. the position of the motor, is computed from the number of rotations as carried out by the drive shaft in connection with the actual output position of the output element and in consideration of a gear ratio of a reduction gear usually employed in connection therewith.

In order to keep the detection of signals for both the output and the input as less error-prone as possible, it is of advantage if the distances between the sensor rings and the sensor chips are kept within certain tolerance limits. In addition, inclinations of the sensor rings relative to the sensor chips should be avoided.

According to the invention it is thus provided that the sensor ring for the input and the sensor ring for the output are congruently arranged to both sides of the circuit board and, more preferably, that the sensor device being associated to the sensor ring for the output and the sensor device being associated to the sensor ring for the input are arranged to both sides of the circuit board and diametrically opposed, by which a mutual interference of the sensor devices can be excluded to the greatest extent possible.

In order to enable a proper parallel guidance of the sensor rings in relation to the sensor devices being associated to them, respectively, in addition, the invention suggests the measures as explained in the following.

A ring-shape sliding guiding track for the exact guidance of the output sensor ring is provided at the corresponding side of the circuit board, which sensor ring is arranged on the circuit board opposite to the motor. In addition, the housing of the sliding guiding track may comprise means for the fixation and guidance of wire components such as cables of the circuit board.

According to the invention it is provided that an axial bearing, which guides, axially opposite to the output, the drive shaft in the housing of the motor, shall be arranged as close as possible to the sensor ring both with respect to configuration and space, so that the input/drive sensor ring can be guided in an exact flat manner.

By the provision of a slide bearing for the sensor ring for the output and by a corresponding positioning of the upper axial bearing for the drive shaft it becomes possible to arrange and guide both sensor rings as parallel and concentric as possible in relation to the sensor chips being associated to them, so that axial and angular deviations with respect to tolerances can be kept extremely low and detection errors do rarely occur.

The circuit board can be arranged relative to the input sensor ring in an exact parallel alignment, in that connecting elements are provided with it which are configured to cooperate with a housing of the motor in such a way that an exact distance can be kept between the housing of the motor and the circuit board.

According to a further embodiment of the invention it is provided that the sensor shaft is configured as a hollow shaft for the reception of wiring components. These may be wiring components (cable, data bus) which originate from a further drive unit being arranged between the next arm members of a manipulator. By that the wiring components can be safely guided through the inner of the manipulator and be protected against the mechanics of the drive units.

The invention is characterized by the advantage that only one single integrated circuit board is employed per joint, which circuit board serves for the entire control of just said joint only. Also, hereby it becomes possible in a simple manner to create a connection with other joints, in that the one circuit board of the one joint is connected with the other circuit board of the other joint by means of supply and signal bus lines.

By the omission of complicated wiring and of at least one further circuit board for the output side sensor device altogether a more compact and thus a more light structure of the drive unit can be realized. In total less components are required, by which also the time for assembly and, if applicable, maintenance periods may be reduced, both being associated with cost reduction.

At the same time the hollow sensor shaft for the guidance of the still required wiring components in the center of the drive unit can serve as some kind of protective sleeve for said wiring.

The arrangement of both the sensor device for the output and of the sensor device for the drive/input at one single circuit board proves to be less susceptible to faults and less error-prone. The programming of the evaluation algorithms will be substantially simplified.

Therefore, in this context the invention also relates to a robot with a manipulator having a plurality of arm members, the robot comprising a drive unit according to the aforementioned embodiments in at least one joint being arranged between arm members of said manipulator.

Further advantages and features do become apparent from the description of the embodiment as shown in the accompanying drawings, in which
- Fig. 1: is an axial longitudinal section along a drive unit according to the invention;
- Fig. 2: is an explosive view of this embodiment; and
- Fig. 3: shows the arrangement of the sensor rings of the drive shaft and of the sensor shaft in sections.

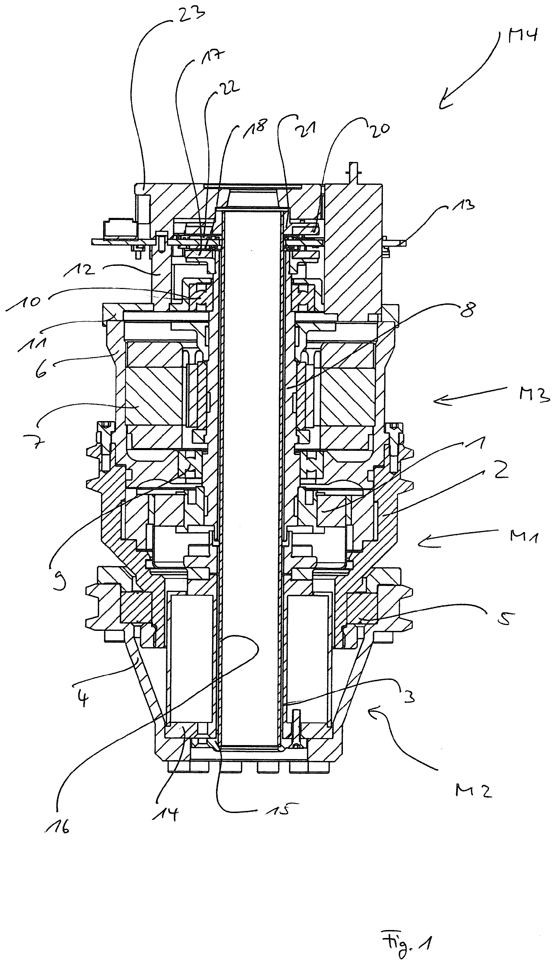

As an example, Fig. 1 shows an embodiment of a drive unit according to the invention in a cross-sectional view along the rotational axis, i.e. in a longitudinal extension of the drive unit.

As can be seen, the drive unit substantially is formed by components and parts, which are configured in a rotational symmetric manner.

According to the invention, a module-type configuration is provided in which several modules are functionally cooperating and engaging with each other along an axial orientation. Each module as such can be singularly exchanged and can be connected by means of connection techniques, which are correspondingly constructed and configured according to the invention, respectively.

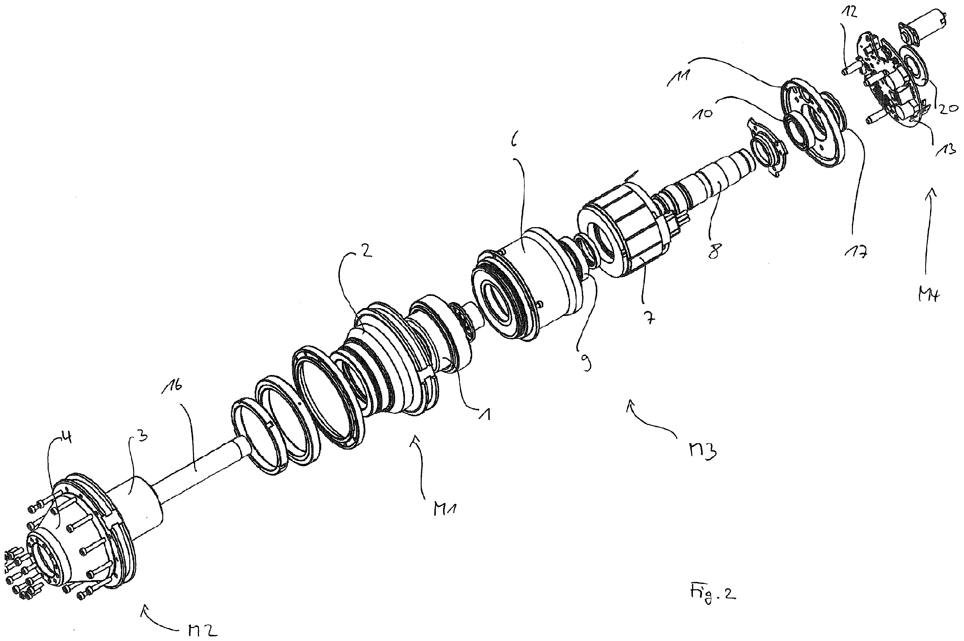

The drive unit as shown in Fig. 1 and Fig. 2 substantially comprises four drive modules which are functionally distinct.

A first drive module M1 contains a gear 1, for example a wave gear, which is received in a housing 2. The output element of the gear 1 is connected to a housing 4 of a second drive module M2 by means of an output shaft 3 in a rotationally fixed, i.e. torque-transmitting manner.

The second drive module M2 serves for the output and for that purpose is rotationally fixedly connected with a not-shown axial or arm member of a manipulator or robot arm, while the housing 2 of the first drive module M1 is connected to a further not-shown arm member of said manipulator. The housing 4 of the second drive module M2 is rotatably supported against the housing 2 of the first drive module M1 by means of a radial bearing 5.

Axially opposite to the second drive module M2 a third drive module M3 is fixed to the first drive module M1, which third drive module M3 comprises a housing 6, inside which a motor 7 is arranged, which motor 7 actuates a motor or drive shaft 8.

The drive shaft 8 is rotatably supported by means of a first axial bearing 9 close to the gear 1 and by means of a second axial bearing 10 in a cover 11 for the housing 6 and is thereby centrally supported in the drive unit.

On top of the housing 6 of the third drive module M3 or of the cover 11 associated thereto, respectively, a fourth drive module M4 is fixed by means of connecting supports and spacers 12, which fourth drive module M4 comprises a circuit board 13 or PCB for sensor and control electronics assembly.

The drive shaft 8 of the motor 7, which is formed as a hollow shaft, traverses through the cover 11 and extends to the side of the circuit board 13, which side faces the cover 11.

At its face side the housing 4 of the second drive module M2 is rotationally fixedly bolted by means of a flange 14 with a flange 15 of a sensor shaft 16.

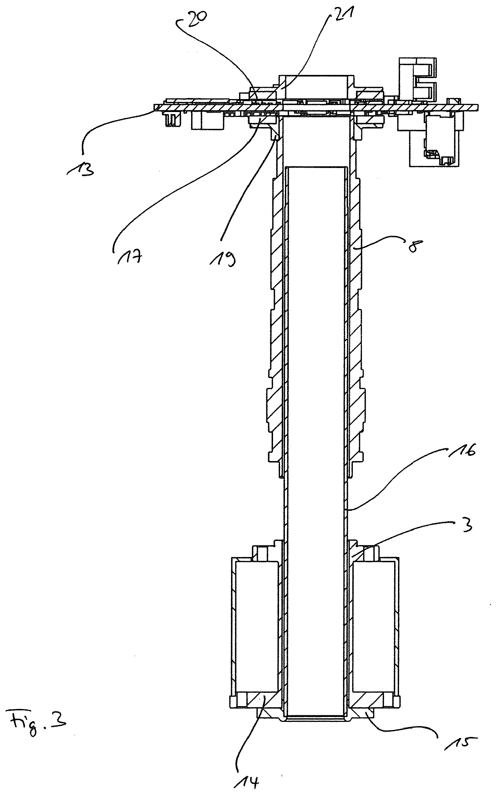

As can be seen in Fig. 1, the sensor shaft 16 traverses the output shaft 3 and the input/drive shaft 8 of the motor 7 with a radial distance and extends through an opening in the circuit board 13 up to the side of the circuit board 13, which side is opposite to the third drive module M3 (In Fig. 3 the sensor shaft 16 is shown in a retracted position so as to illustrate the arrangement inside the hollow drive shaft 8).

The face-side axial end of the drive shaft 8, which faces the circuit board 13, comprises a sensor ring 17, while a sensor chip 18 is arranged on the circuit board 13, which sensor chip 18 is associated to said sensor ring 17 in a corresponding way. The sensor ring 17 is fixed by and on a support ring 19, so that the sensor ring 17 rotates together with the drive shaft 8.

Also, at its face-side axial end the sensor shaft 16 comprises a sensor ring 20, which is fixed in a corresponding support ring 21 as well and which thereby rotates above a sensor chip 22 on the circuit board 13, which sensor chip 22 is associated to said sensor ring 20.

The sensor rings 17 and 20 comprise at least one (not-shown) magnet element, wherein the sensor chips 18 and 22 each are configured to detect the respective positions of the drive shaft 8 and the sensor shaft 16, respectively, by application of the Hall-effect.

A radial guide track or guidance 23 is arranged on the circuit board 13, which is bolted together with the spacers 12, in order to guide the sensor ring 20 of the sensor shaft 16 exactly concentrically and parallel to the sensor chip 22.

In order to exactly concentrically and parallel guide the sensor ring 17 of the drive shaft 8 in relation to the sensor chip 18, the second axial bearing 10 of the third drive module M3 is arranged as close as possible to the circuit board 13.

## Claims

1. Drive unit for a joint being arranged between two arm members of a manipulator of a robotic system, the drive unit being intended for the rotatory drive of the one arm member in relation to the other arm member, having a motor (7), which drives a drive shaft (8), and having an output element (3,4), which is connected to the one arm member and which is directly or indirectly set into rotation by means of the drive shaft (8), comprising a circuit board (13), on which a sensor device (18) with respect to the drive as provided by the drive shaft (8) and a sensor device (22) with respect to the output as provided by the output element (3,4) are arranged at opposite sides of the circuit board,
- in which the drive shaft (8) is formed as a hollow shaft and the output element (3,4) is rotationally fixedly connected to a sensor shaft (16), which traverses the drive shaft (8) with a radial distance and which extends through an opening in the circuit board (13) to above the side of the circuit board (13), which side is opposite to the motor (7),
- in which the drive shaft (8) extends to below the circuit board (13), wherein the sensor device (18) for the drive is arranged at the side of the circuit board (13), which faces the motor (7),
- in which a sensor ring (20) is arranged at the face-side axial end of the sensor shaft (16) above the circuit board (13), which sensor ring (20) cooperates with the sensor device (22) for the output,
- in which a sensor ring (17) is arranged at the face-side axial end of the drive shaft (8), which end faces the circuit board (13), which sensor ring (17) cooperates with the sensor device (18) for the drive,
- and in which the sensor ring (17) for the drive and the sensor ring (20) for the output are located opposite to each other at both sides of the circuit board (13) in a congruent manner;
**characterized in that**
the sensor device (22) being associated to the sensor ring (20) for the output and the sensor device (18) being associated to the sensor ring (17) for the drive are located diametrically opposite to each other at both sides of the circuit board (13).

2. Drive unit according to claim 1, in which a sliding guide (23) for the sensor ring (20) is arranged on the circuit board (13) .

3. Drive unit according to claim 2, in which a housing of the sliding guide (23) comprises means for fixation of wiring components.

4. Drive unit according to one of claims 1 to 3, in which the sensor shaft (16) is formed as a hollow shaft for receiving of wiring components.

5. Drive unit according to one of claims 1 to 4, in which the drive shaft (8) is supported by an axial bearing (10), which is arranged as close as possible to the sensor ring (17).

6. Drive unit according to claims 1 to 5, in which the circuit board (13) comprises connecting elements (12) which are configured to cooperate with a housing (6) of the motor (7) in such a way that the circuit board (13) can be arranged in an exact parallel orientation with respect to the sensor rings (17,20).

7. Drive unit according to one of claims 1 to 6, in which the drive unit comprises a second drive module (M2) being rotationally fixedly connected with the one arm member of the manipulator and a first drive module (M1) being rotationally fixedly connected with the other arm member, in which a housing (4) of the second drive module (M2) is rotatably supported against a housing (2) of the first drive module (M1) ;
in which the first drive module (M1) contains a gear (1), and in which a third drive module (M3) is fixed to the first drive module (M1), which third drive module (M3) comprises a housing (6), inside which the motor (7) is arranged, and in which a fourth drive module (M4) is fixed to the top of the housing (6) of the third drive module (M3) by means of connecting supports and spacers (12), which fourth drive module (M4) comprises the circuit board (13); and
in which the first drive module (M1), the second drive module (M2), the third drive module (M3) and the fourth drive module (M4) are configured to be functionally cooperating and engaging with each other along an axial orientation.

8. Drive unit according to claim 7, in which the first drive module (M1), the second drive module (M2), the third drive module (M3) and the fourth drive module (M4) are configured to be singularly exchangeable.

9. Robot having a manipulator consisting of several arm members and comprising a drive unit according to claims 1 to 8 in at least one joint being arranged between arm members of the manipulator.

## Patentansprüche

1. Antriebseinheit für ein zwischen zwei Armgliedern eines Manipulators eines Robotersystems angeordnetes Gelenk, wobei die Antriebseinheit für den rotatorischen Antrieb des einen Armglieds gegenüber dem anderen Armglied vorgesehen ist, wobei sie einen Motor (7) aufweist, der eine Antriebswelle (8) antreibt, und ein Abtriebselement (3,4) aufweist, das mit dem einen Armglied in Verbindung steht und mittels der Antriebswelle (8) mittelbar oder unmittelbar in Drehung versetzt wird, umfassend eine Leiterplatte (13), auf der eine Sensorvorrichtung (18) für den durch die Antriebswelle (8) bereitgestellten Antrieb und eine Sensorvorrichtung (22) für den durch das Abtriebselement (3,4) bereitgestellten Abtrieb an gegenüberliegenden Seiten der Leiterplatte angeordnet sind,
- bei der die Antriebswelle (8) als eine Hohlwelle ausgebildet ist und das Abtriebselement (3,4) drehfest mit einer Sensorwelle (16) verbunden ist, die die Antriebswelle (8) in einem radialen Abstand durchsetzt und sich durch eine Öffnung in der Leiterplatte (13) bis oberhalb der dem Motor (7) gegenüberliegende Seite der Leiterplatte (13) erstreckt,
- bei der sich die Antriebswelle (8) bis unterhalb der Leiterplatte (13) erstreckt, wobei die Sensorvorrichtung (18) für den Antrieb an der dem Motor (7) zugewandten Seite der Leiterplatte (13) angeordnet ist,
- wobei ein Sensorring (20) an dem stirnseitigen axialen Ende der Sensorwelle (16) oberhalb der Leiterplatte (13) angeordnet ist, wobei der Sensorring (20) mit der Sensorvorrichtung (22) für den Abtrieb zusammenwirkt,
- wobei ein Sensorring (17) an dem stirnseitigen axialen Ende der Antriebswelle (8) angeordnet ist, wobei das Ende der Leiterplatte (13) zugewandt ist, wobei der Sensorring (17) mit der Sensorvorrichtung (18) für den Abtrieb zusammenwirkt,
- und bei der sich der Sensorring (17) für den Antrieb und der Sensorring (20) für den Abtrieb deckungsgleich zu beiden Seiten der Leiterplatte (13) einander gegenüberliegen;
**dadurch gekennzeichnet, dass**
die dem Sensorring (20) für den Abtrieb zugeordnete Sensorvorrichtung (22) und die dem Sensorring (17) für den Antrieb zugeordnete Sensorvorrichtung (18) zu beiden Seiten der Leiterplatte (13) einander diametral gegenüberliegen.

2. Antriebseinheit nach Anspruch 1, bei der auf der Leiterplatte (13) eine Gleitführung (23) für den Sensorring (20) angeordnet ist.

3. Antriebseinheit nach Anspruch 2, bei der ein Gehäuse der Gleitführung (23) Mittel zur Befestigung von Leitungskomponenten umfasst.

4. Antriebseinheit nach einem der Ansprüche 1 bis 3, bei der die Sensorwelle (16) zur Aufnahme von Leitungskomponenten als eine Hohlwelle ausgebildet ist.

5. Antriebseinheit nach einem der Ansprüche 1 bis 4, bei der Antriebswelle (8) durch ein Axiallager (10) gelagert ist, das so nahe wie möglich an dem Sensorring (17) angeordnet ist.

6. Antriebseinheit nach Anspruch 1 bis 5, bei der die Leiterplatte (13) Verbindungselemente (12) umfasst, die so konfiguriert sind, dass sie mit einem Gehäuse (6) des Motors (7) so zusammenzuwirken, dass die Leiterplatte (13) in einer exakten parallelen Ausrichtung zu den Sensorringen (17,20) anordbar ist.

7. Antriebseinheit nach einem der Ansprüche 1 bis 6, bei der die Antriebseinheit ein zweites Antriebsmodul (M2), das mit dem einen Armglied des Manipulators drehfest verbunden ist und ein erstes Antriebsmodul (M1) umfasst, das mit dem anderen Armglied drehfest verbunden ist, bei dem ein Gehäuse (4) des zweiten Antriebsmoduls (M2) an einem Gehäuse (2) des ersten Antriebsmoduls (M1)drehbar gelagert ist;
bei der das erste Antriebsmodul (M1) ein Getriebe (1) enthält und ein drittes Antriebsmodul (M3) an dem ersten Antriebsmodul (M1) befestigt ist, wobei das dritte Antriebsmodul (M3) ein Gehäuse (6) umfasst, innerhalb dessen der Motor (7) angeordnet ist, und in dem ein viertes Antriebsmodul (M4) mittels Verbindungsstützen und Abstandshaltern (12) an der Oberseite des Gehäuses (6) des dritten Antriebsmoduls (M3) befestigt ist, wobei das vierte Antriebsmodul (M4) die Leiterplatte (13) umfasst; und
wobei das erste Antriebsmodul (M1), das zweite Antriebsmodul (M2), das dritte Antriebsmodul (M3) und das vierte Antriebsmodul (M4) so konfiguriert sind, dass sie entlang einer axialen Ausrichtung funktionell zusammenwirken und miteinander in Eingriff stehen.

8. Antriebseinheit nach Anspruch 7, wobei das erste Antriebsmodul (M1), das zweite Antriebsmodul (M2), das dritte Antriebsmodul (M3) und das vierte Antriebsmodul (M4) so konfiguriert sind, dass sie einzeln austauschbar sind.

9. Roboter, der einen Manipulator aus mehreren Armgliedern aufweist, umfassend eine Antriebseinheit nach den Ansprüche 1 bis 8 in zumindest einem zwischen Armgliedern des Manipulators angeordneten Gelenk.

## Revendications

1. Unité d'entraînement pour une articulation agencée entre deux éléments de bras d'un manipulateur d'un système robotisé, l'unité d'entraînement étant destinée à l'entraînement rotatif de l'élément de bras par rapport à l'autre élément de bras, ayant un moteur (7), qui entraîne un arbre d'entraînement (8), et ayant un élément de sortie (3, 4), qui est relié à l'élément de bras et qui est directement ou indirectement mis en rotation au moyen de l'arbre d'entraînement (8), comprenant une carte de circuit imprimé (13), sur laquelle un dispositif de capteur (18) par rapport à l'entraînement tel que fourni par l'arbre d'entraînement (8) et un dispositif de capteur (22) par rapport à la sortie telle que fournie par l'élément de sortie (3, 4) sont agencés sur des côtés opposés de la carte de circuit imprimé,
- dans laquelle l'arbre d'entraînement (8) est formé en tant qu'arbre creux et l'élément de sortie (3,4) est relié à demeure en rotation à un arbre de capteur (16), qui traverse l'arbre d'entraînement (8) avec une distance radiale et qui s'étend à travers une ouverture dans la carte de circuit imprimé (13) vers le dessus du côté de la carte de circuit imprimé (13), lequel côté est opposé au moteur (7),
- dans laquelle l'arbre d'entraînement (8) s'étend vers le dessous de la carte de circuit (13), dans lequel le dispositif de capteur (18) pour l'entraînement est agencé au niveau du côté de la carte de circuit imprimé (13), qui est orientée vers le moteur (7),
- dans laquelle une bague de capteur (20) est agencée au niveau de l'extrémité axiale côté face de l'arbre de capteur (16) au-dessus de la carte de circuit imprimé (13), laquelle bague de capteur (20) coopère avec le dispositif de capteur (22) pour la sortie,
- dans laquelle une bague de capteur (17) est agencée au niveau de l'extrémité axiale côté face de l'arbre d'entraînement (8), laquelle extrémité est orientée vers la carte de circuit imprimé (13), laquelle bague de capteur (17) coopère avec le dispositif de capteur (18) pour l'entraînement,
- et dans laquelle la bague de capteur (17) pour l'entraînement et la bague de capteur (20) pour la sortie sont situées à l'opposé l'une de l'autre au niveau des deux côtés de la carte de circuit imprimé (13) de manière congruente ;
**caractérisée en ce que**
le dispositif de capteur (22) associé à la bague de capteur (20) pour la sortie et le dispositif de capteur (18) associé à la bague de capteur (17) pour l'entraînement sont situés diamétralement à l'opposé l'un de l'autre au niveau des deux côtés de la carte de circuit imprimé (13).

2. Unité d'entraînement selon la revendication 1, dans laquelle un guide coulissant (23) pour la bague de capteur (20) est disposé sur la carte de circuit imprimé (13).

3. Unité d'entraînement selon la revendication 2, dans laquelle un logement du guide coulissant (23) comprend un moyen de fixation de composants de câblage.

4. Unité d'entraînement selon l'une des revendications 1 à 3, dans laquelle l'arbre de capteur (16) est formé en tant qu'arbre creux pour recevoir des composants de câblage.

5. Unité d'entraînement selon l'une des revendications 1 à 4, dans laquelle l'arbre d'entraînement (8) est supporté par un palier axial (10), qui est agencé le plus près possible de la bague de capteur (17).

6. Unité d'entraînement selon les revendications 1 à 5, dans laquelle la carte de circuit imprimé (13) comprend des éléments de connexion (12) qui sont configurés pour coopérer avec un logement (6) du moteur (7) de manière à ce que la carte de circuit imprimé (13) puisse être agencée dans une orientation parallèle exacte par rapport aux bagues de capteur (17, 20).

7. Unité d'entraînement selon l'une des revendications 1 à 6, dans laquelle l'unité d'entraînement comprend un deuxième module d'entraînement (M2) relié à demeure en rotation à l'élément de bras du manipulateur et un premier module d'entraînement (M1) relié à demeure en rotation à l'autre élément de bras, dans laquelle un logement (4) du deuxième module d'entraînement (M2) est supporté de manière rotative contre un logement (2) du premier module d'entraînement (M1) ;
dans laquelle le premier module d'entraînement (M1) contient un engrenage (1), et dans laquelle un troisième module d'entraînement (M3) est fixé au premier module d'entraînement (M1), lequel troisième module d'entraînement (M3) comprend un logement (6), à l'intérieur duquel le moteur (7) est agencé, et dans laquelle un quatrième module d'entraînement (M4) est fixé au sommet du logement (6) du troisième module d'entraînement (M3) au moyen de supports de connexion et d'entretoises (12), lequel quatrième module d'entraînement (M4) comprend la carte de circuit imprimé (13) ; et
dans laquelle le premier module d'entraînement (M1), le deuxième module d'entraînement (M2), le troisième module d'entraînement (M3) et le quatrième module d'entraînement (M4) sont conçus pour être fonctionnellement coopérant et entrer en priser l'un avec l'autre le long d'une orientation axiale.

8. Unité d'entraînement selon la revendication 7, dans laquelle le premier module d'entraînement (M1), le deuxième module d'entraînement (M2), le troisième module d'entraînement (M3) et le quatrième module d'entraînement (M4) sont conçus pour être échangeables de manière collective.

9. Robot ayant un manipulateur constitué de plusieurs éléments de bras et comprenant une unité d'entraînement selon les revendications 1 à 8 dans au moins un joint disposé entre des éléments de bras du manipulateur.
